# EUROPEAN PATENT APPLICATION

(11) **EP 2 399 787 A1**
(43) Date of publication of application: **28.12.2011**
(21) Application number: 10006447.6
(22) Date of filing: 22.06.2010
(51) Int. Cl.: B60R 22/48, B60R 22/46

(54) **Autononmous motorized belt retractor**

(71) Applicant: AUTOLIV DEVELOPMENT AB, 447 83 Vargarda (SE)
(72) Inventor: Judet, Bernard, 95520 Osny (FR)
(74) Representative: Müller Verweyen

(57) **Abstract**

The present invention relates to a control unit (3) of a motorized belt retractor (1), characterized in that the control unit (3) comprises a state machine module (9). The implementation of a state machine module (9) into a control unit (3) of a motorized belt retractor (1) has the advantage that the motorized belt retractor (1) does not need to be connected to a central ECU via a vehicle network, e.g. a CAN or LIN. A motorized belt retractor (1) which is controlled by the inventive control unit (3) may be autonomous and simply connected to the power supply from the vehicle battery.

## Description

The present invention relates to a control unit of a motorized belt retractor, a motorized belt retractor with such a control unit and a method of controlling a motorized belt retractor.

Motorized belt retractors are typically used in vehicles with seats having a motorized safety belt mechanism connected to a central electronic control unit (ECU) via a vehicle network such as a controller area network (CAN) or a local interconnect network (LIN). Such known systems may detect a pre-impact situation before an accident occurs by receiving a signal from an accelerometer which quickly detects a strong negative acceleration of the vehicle that may be caused by a slam on the brakes or a collision, for example. Upon a signal from the ECU, the motorized belt retractors, which are usually mounted at each vehicle seat, quickly retract the associated safety belts such that a tight contact between the belt and a passenger's body is provided before the inertia of the passenger's body causes a forward pressure against the safety belt. Thereby, the acceleration of a passenger's body relative to the seat and safety belt is minimized and the risk of body harm due to the impact of the belt on the body during an accident is reduced.

Such a system is for instance known from EP 1 705 081 B1 which is directed to a seat belt retractor having an energy absorbing mechanism which absorbs impact energy applied to an occupant so as to limit load on the seat belt in the event of an emergency such as a collision.

Another example of such a known system is described in US 2007/0284174 A1, which relates to a vehicle belt apparatus including an electric-type pretensioner that includes a motor for rotationally driving a belt reel to take up a belt.

It is a disadvantage of the known systems that they must be connected to a central ECU via a vehicle network. It is, however, desirable to instrument sparsely equipped vehicles without an implemented vehicle network with a motorized belt retractor. Commonly known ECUs used for controlling a plurality of motorized belt retractors via a vehicle network are complex and expensive. Therefore, there is a need of a simplified and autonomous system for controlling a motorized belt retractor.

It is therefore the object of the present invention to provide a control unit of a motorized belt retractor which is simplified and autonomous, such that the motorized belt retractor may be installed cost-effectively in a sparsely equipped vehicle without an implemented vehicle network.

This problem is solved by a control unit according to the subject-matter of claim 1, a motorized belt retractor according to the subject-matter of claim 10, and a method according to the subject-matter of claim 11. Advantageous embodiments of the invention are subject of the respective dependent claims.

According to a first aspect of the present invention a control unit of a motorized belt retractor is provided, wherein the control unit comprises a state machine module.

Herein, the term "state machine" means a basic controlling logic in which a finite number of states is defined, wherein one or more executable actions may be attributed to one or more states and transitions between states may be triggered in certain states. A "state machine module" is defined herein as a hardware module with the functionality of a state machine.

The implementation of a state machine module into a control unit for motorized belt retractors has the advantage that the motorized belt retractor does not need to be connected to a central ECU via a vehicle network, e.g. a CAN or LIN. A motorized belt retractor which is controlled by the inventive control unit may be autonomous and simply connected to the power supply from the vehicle battery. Therefore, even sparsely equipped vehicles without an implemented vehicle network may be easily instrumented with a motorized belt retractor having an inventive control unit.

Another advantage of the suggested solution is that the replacement of the motorized retractor is simplified because there is no need for a configuration of the retractor for a right, left or rear seat allocation or for left or right hand driven vehicles. Furthermore, the retractor is not connected to the vehicle network, so there is no need for any specific message identifiers to communicate with the network.

It is advantageous that the control unit may further comprise an accelerometer and that the state machine module is configured to receive the output of the accelerometer as an input value. Preferably, such an accelerometer is a multi-axes accelerometer, which is able to detect an acceleration or deceleration into any spatial direction. If the absolute value of acceleration or deceleration exceeds a predefined threshold value, the state module may change to a state in which it is configured to activate the motorized belt retractor for belt retraction. Analogously, if the absolute value of acceleration or deceleration falls below the predefined threshold value, the state module may change to a state in which it is configured to activate the motorized belt retractor for belt release.

Preferably, the state machine module is further configured to receive the output of a rotational-speed sensor of the motor of the motorized belt retractor as an input value. Thus, the output of the rotational-speed sensor serves as a feedback signal to the state machine module which may change its output when the value exceeds or falls below a predefined threshold value. A pre-defined tensioning profile may be applied by adapting the outputted pulse width modulated (PWM) signal according to the feedback signal.

It is further preferred that the control unit may further comprise a voltage regulator having an input line for connection with a battery, i.e. typically the vehicle battery, and that the state machine module may be configured to receive the output of the voltage regulator as an input value. Depending on this input value, the state machine module may be in a power-on or power-down state. Furthermore, the voltage regulator may include a reset functionality which may trigger a re-initialization of the state machine and/or a watchdog activation. Such an activated watchdog may be used to protect the system against over-voltage, under-voltage, over-current, over-heat, MOSFET open and short-circuit and state machine faults.

In a preferred embodiment of the invention the state machine module is configured to receive the state of an associated buckle switch as an input value. As it is also preferred to equip each seat with a motorized belt retractor having an inventive control unit, there is a corresponding seat belt and buckle with an implemented buckle switch associated with it. The state of the state machine module may depend on whether the belt is locked to the buckle or not. A retraction action may for example be deactivated as long as the buckle switch detects that the belt is not locked to the buckle.

It is further preferred that the control unit may further comprise a power stage for driving the motor of the belt retractor and that the state machine module is configured to receive a defect signal from the power stage as an input value and to output an error status for error indication upon reception of a defect signal from the power stage. Preferably, a PWM signal is outputted from the state machine module to the power stage for activating the motorized belt retractor for belt retraction or release. The defect signal sent back from the power stage to the state machine module may cause a change of the state of the state machine to a state in which it is configured to deactivate the power stage and to output an error status to an error indication means such as an LED or an acoustic warning means.

In a preferred embodiment of the invention, any state of the state machine module is defined by the collectivity of at least one 1-bit information derived from the comparison between at least one input value with a corresponding predefined threshold value. In such a preferred system the state machine module can be in a finite number of states of which at least one state is attributed to a first group of states and at least one other state is attributed to a second group of states. The state machine module is preferably configured to activate the motorized belt retractor for belt retraction if it is in a state of the first group of states and to activate the motorized belt retractor for belt release if it is in a state of the second group of states.

It is advantageous that the state machine module may be configured to change its state upon any activation of the motorized belt retractor from a first state to a second state, wherein the second state is, depending on the first state, a state of the first group of states or a state of the second group of states.

According to a second aspect of the invention a method of controlling a motorized belt retractor is provided, wherein a state machine is used in which a finite number of states is defined. The method comprises the steps of:
defining a first group of states among the finite number of states, wherein at least one state is attributed to the first group;
defining a second group of states among the finite number of states, wherein at least one other state is attributed to the second group;
receiving at least one input value at the state machine; comparing the at least one input value with a corresponding predefined threshold value;
deriving at least one 1-bit information from the comparison between the at least one input value with the corresponding predefined threshold value;
identifying a state of the state machine based on the collectivity of the at least one derived 1-bit information; activating the motorized belt retractor for belt retraction if it is in an identified state attributed to the first group of states; and
activating the motorized belt retractor for belt release if it is in an identified state attributed to the second group of states.

This method of controlling simplifies the controlling of a motorized belt retractor such that a complex central ECU connected to a vehicle network is not needed any more. Advantageously, any seat of a sparsely equipped vehicle may be upgraded with an autonomous motorized belt retractor that is individually controlled in such a way.

Preferably, the method further comprises a step of changing the state of the state machine upon any activation of the motorized belt retractor from a first state to a second state, wherein the second state is, depending on the first state, a state of the first group of states or a state of the second group of states.

In analogy to the preferred embodiments of the inventive control unit, the output of an accelerometer may preferably be received as an input value at the state machine. Furthermore, the output of a rotational-speed sensor of the motor of the motorized belt retractor may be received as an input value at the state machine. the output of a voltage regulator is received as an input value at the state machine. Moreover, the state of an associated buckle switch may be received as an input value at the state machine. Further, a defect signal from a power stage for driving the motor of the belt retractor may be received as an input value at the state machine and an error status for error indication upon reception of a defect signal from the power stage may be outputted.

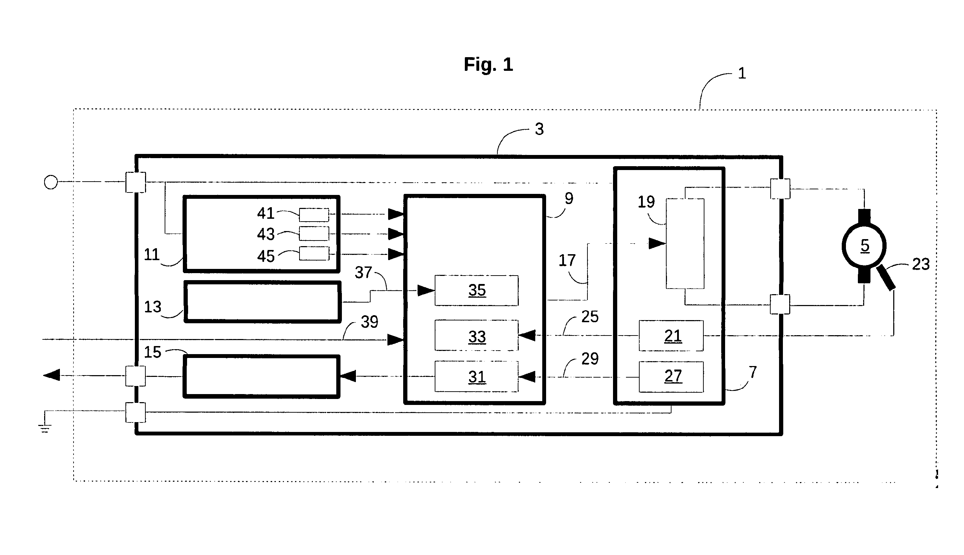

In the following, the present invention is described in further detail with reference to the accompanying figure 1 which shows schematically a preferred embodiment of an inventive belt retractor.

Fig. 1 shows a belt retractor 1 comprising a control unit 3 which is connected to a motor 5 for taking up a safety belt on a reel (not shown). The control unit 3 comprises a power stage 7 for driving the motor 5, a state machine module 9, a voltage regulator 11, a multi-axes accelerometer 13, and a signal adapter 15.

The power stage 7 is connected with the motor 5 and gets a PWM signal 17 as an input signal from the state machine module 9 according to a predefined tensioning profile. The PWM signal 17 is used to control the rotational speed of the motor 5 via a power component 19 including an H-bridge, driver, and power MOFETs. A sensing component 21 within the power stage 7 receives a signal indicating the rotational speed of the motor 5 from a Hall sensor 23 mounted at the motor 5. Information about the rotational speed of the motor 5 is fed back to the state machine module 9 as a sensor input value 25. Furthermore, the power stage 7 comprises a defect component 27 which outputs a defect signal 29 that informs the state machine module 9 about a defect of the power stage 7. A fault management component 31 within the state machine module 9 receives the defect signal 29 and invokes an optical or acoustic error indication via the signal adapter 15. For example, the error indication may be performed by a visible LED indicating an error status.

The state machine module 9 further comprises a power stage management component 33 and a data acquisition component 35. The power stage management component 33 generates the PWM signal 17 that is outputted to the power component 19 of the power stage 7. The data acquisition component 35 receives a data input signal 37 including information about an acceleration from the accelerometer 13. Additionally, a buckle switch input value 39 is received by the state machine module 9 from an associated buckle switch (not shown). Further input values are received by the state machine module 9 from the voltage regulator 11 including a voltage component 41, a watchdog component 43, and a reset component 45. The voltage component 41 regulates the power supply to the state machine module 9.The watchdog component 43 may signal an over-voltage, under-voltage, over-current, over-heat, MOSFET open and short-circuit or other faults as an input value to the state machine module 9. The reset component 45 may trigger a re-initialization of the state machine module 9.

Within the state machine module 9, which includes a state machine functionality, a finite number of states is defined. A state is defined as the collectivity of the plurality of 1-bit information deduced from the comparison between the plurality of input values with a corresponding predefined threshold value. For example, a state may be illustrated as a plurality of binary digits:

| | | | |
|---|---|---|---|
| • voltage above Uo? | → | Yes:1, | No:0 |
| • voltage, current, and heat within limits? | → | Yes:1, | No:0 |
| • reset signal below threshold? | → | Yes:1, | No:0 |
| • defect signal 29 below threshold? | → | Yes:1, | No:0 |
| • buckle switch signal 39 above threshold? | → | Yes:1, | No:0 |
| • acceleration signal 37 above threshold? | → | Yes:1, | No:0 |
| • sensor signal 25 within limits? | → | Yes:1, | No:0 |

A state in which all comparisons yield the answer "Yes" may therefore be represented as the binary number 1111111 corresponding to the decimal number 127. Thus, there is a number of 2⁷=128 possible different states in this example. These states may be grouped into those states to which the action of activating the motorized belt retractor 1 for belt retraction is attributed and into those states to which the action of activating the motorized belt retractor 1 for belt release is attributed. In addition to these two groups, there may also be a third group of states in which the state machine module 9 is idle.

In the above example, the states 1111111 and 1111110 may be grouped into the first group of states to which the action of activating the motorized belt retractor 1 for belt retraction is attributed. Only the 1-bit information deduced from the sensor signal 25 may have a value of 0 or 1, whereas the other binary digits must be 1. All other states may be grouped into the second group of states to which the action of activating the motorized belt retractor 1 for belt release is attributed.

Certain transitions may also be attributed to certain states. For example, all states in which the bit corresponding to the reset signal is set to 1 may trigger a transition to the state 1111101, which may serve as an initial state to which the action of activating the motorized belt retractor 1 for belt release is attributed.

## Claims

1. A control unit (3) of a motorized belt retractor (1), **characterized in that** the control unit (3) comprises a state machine module (9).

2. The control unit (3) according to claim 1, further comprising an accelerometer (13), wherein the state machine module (9) is configured to receive the output of the accelerometer (13) as an input value (37).

3. The control unit (3) according to any of the preceding claims, wherein the state machine module (9) is configured to receive the output of a rotational-speed sensor (23) of the motor (5) of the motorized belt retractor (1) as an input value (25).

4. The control unit (3) according to any of the preceding claims, further comprising a voltage regulator (11) having an input line for connection with a battery, wherein the state machine module (9) is configured to receive the output of the voltage regulator (11) as an input value.

5. The control unit according to any of the preceding claims, wherein the state machine module (9) is configured to receive the state of an associated buckle switch as an input value (39).

6. The control unit according to any of the preceding claims, further comprising a power stage (7) for driving the motor (5) of the belt retractor (1), wherein the state machine module (9) is configured to receive a defect signal from the power stage as an input value (29) and to output an error status for error indication upon reception of a defect signal from the power stage (7).

7. The control unit according to any of the preceding claims, wherein any state of the state machine module (9) is defined by the collectivity of at least one 1-bit information derived from the comparison between at least one input value with a corresponding predefined threshold value; wherein the state machine module (9) can be in a finite number of states of which at least one state is attributed to a first group of states among the finite number of states and at least one other state is attributed to a second group of states among the finite number of states; and wherein the state machine module (9) is configured to activate the motorized belt retractor (1) for belt retraction if it is in a state of the first group of states and to activate the motorized belt retractor (1) for belt release if it is in a state of the second group of states.

8. The control unit according to claim 7, wherein the state machine module (9) is configured to change its state upon any activation of the motorized belt retractor (1) from a first state to a second state, wherein the second state is, depending on the first state, a state of the first group of states or a state of the second group of states.

9. A motorized belt retractor (1) comprising a control unit (3) according to any of the preceding claims.

10. A method of controlling a motorized belt retractor (1) by using a state machine in which a finite number of states is defined, comprising:
defining a first group of states among the finite number of states, wherein at least one state is attributed to the first group;
defining a second group of states among the finite number of states, wherein at least one other state is attributed to the second group;
receiving at least one input value at the state machine;
comparing the at least one input value with a corresponding predefined threshold value;
deriving at least one 1-bit information from the comparison between the at least one input value with the corresponding predefined threshold value;
identifying a state of the state machine based on the collectivity of the at least one derived 1-bit information;
activating the motorized belt retractor (1) for belt retraction if it is in an identified state attributed to the first group of states; and
activating the motorized belt retractor (1) for belt release if it is in an identified state attributed to the second group of states.

11. The method according to claim 10, further comprising:
changing the state of the state machine upon any activation of the motorized belt retractor (1) from a first state to a second state, wherein the second state is, depending on the first state, a state of the first group of states or a state of the second group of states.

12. The method according to claim 10 or 11, wherein the output of an accelerometer (13) is received as an input value (37) at the state machine.

13. The method according to any of the claims 10 to 12,
wherein the output of a rotational-speed sensor (23) of the motor (5) of the motorized belt retractor (1) is received as an input value (25) at the state machine.

14. The method according to any of the claims 10 to 13,
wherein the output of a voltage regulator (11) is received as an input value at the state machine.

15. The method according to any of the claims 10 to 14,
wherein the state of an associated buckle switch is received as an input value (39) at the state machine.
